# EUROPEAN PATENT SPECIFICATION

(11) **EP 3 125 530 B1**
(45) Date of publication and mention of the grant of the patent: **09.06.2021**
(21) Application number: 16165192.2
(22) Date of filing: 14.04.2016
(51) Int. Cl.: H04N 5/232, G08B 13/196, G10L 15/22, H04N 7/18, G06F 3/16, G06K 9/00

(54) **VIDEO RECORDING METHOD AND DEVICE**
VIDEOAUFZEICHNUNGSVERFAHREN UND -VORRICHTUNG
PROCÉDÉ ET DISPOSITIF D'ENREGISTREMENT VIDÉO

(30) Priority: 31.07.2015 CN 201510465309
(43) Date of publication of application: 01.02.2017
(73) Proprietor: Xiaomi Inc., Beijing 100085 (CN)
(72) Inventor: FU, Qiang, 100085 BEIJING (CN); WANG, Yang, 100085 BEIJING (CN); HOU, Enxing, 100085 BEIJING (CN)
(74) Representative: Cabinet Beau de Loménie

(56) References cited:
- WO-A1-2015/081820
- JP-B1- 5 656 304
- US-A1- 2004 192 421
- US-A1- 2015 077 555

## Description

### TECHNICAL FIELD

The present invention relates to the field of information technology and, more particularly, to a video recording method and device.

### BACKGROUND

With the development of science and technology, video has become an important communication tool in social networks. Various methods for recording videos and video recording devices emerge endlessly.

In the related art, there is one kind of video recording method, wherein the user operates a video recording device, and when the user finds a scene he wants to capture, he may press a recording button of the video recording device to record a video, and the recorded video may be automatically stored in the video recording device.

Examples of automatic video recording system upon person detection can be found in US-2015/077555-A1, JP-5 656304-B1 and WO2015/081820. Document US-2015/077555-A1 discloses a security system that comprises a light socket camera that automatically starts video recording when a person is detected via motion sensor, sound or facial recognition. Document JP-5-656304-B1 discloses a surveillance camera system that manually or automatically starts video recording when a person is detected via an infrared sensor. Document WO2015/081820 discloses a voice-activated shooting method using voiceprint characteristics. The aspect of detecting the volume of a sound based on a threshold volume is defined in document US2004/0192421.

### SUMMARY

The embodiments of the present invention provide a video recording method and device. The technical solutions are as follows.

According to a first aspect, the invention relates to a video recording method as defined in claim 1

According to a second aspect, there is provided a video recording device according to claim 4

The technical solutions provided by embodiments of the present invention may include the following advantageous effects:
by detecting whether the environmental information around the video recording device, including image information, a piece of position information, a light intensity and a sound information, satisfy corresponding predefined conditions, and starting to record a video if the environmental information satisfy all the corresponding predefined conditions,
the problem in the related art that the video recording process is fussy is solved, and the effect that the video recording process is simple and convenient is achieved.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a video recording method, according to one exemplary embodiment of the present invention;
Fig. 2A is a flow chart of a video recording method, according to another exemplary embodiment of the present invention;
Fig. 2B is a flow chart of detecting environmental information in the embodiment shown in Fig. 2A;
Fig. 3A is a flow chart of a video recording method, according to another exemplary embodiment of the present invention;
Fig. 3B is a flow chart of detecting environmental information in the embodiment shown in Fig. 3A;
Fig. 4A is a flow chart of a video recording method, according to another exemplary embodiment of the present invention;
Fig. 4B is a flow chart of detecting environmental information in the embodiment shown in Fig. 4A;
Fig. 5A is a block diagram of a video recording device, according to one exemplary embodiment of the present invention;
Fig. 5B is a block diagram of one detecting module in the embodiment shown in Fig. 5A;
Fig. 5C is a block diagram of another detecting module in the embodiment shown in Fig. 5A;
Fig. 5D is a block diagram of further another detecting module in the embodiment shown in Fig. 5A;
Fig. 5E is a block diagram of a video recording device, according to another exemplary embodiment of the present invention;
Fig. 5F is a block diagram of a video recording device, according to another exemplary embodiment of the present invention; and
Fig. 6 is a block diagram of a video recording device, according to one exemplary embodiment of the present invention.

Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

The video recording device involved in respective embodiments of the present invention may be an electronic device having a capturing function and an environmental information (may include at least one of sound, an image, a light intensity and a position) acquiring function, such as a smartphone, a photographic camera, a video camera and a camera.

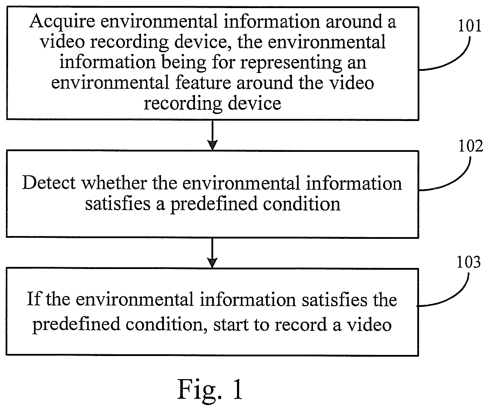

Fig. 1 is a flow chart of a video recording method, according to one exemplary embodiment of the present invention. The video recording method may be used in a video recording device. The video recording method may comprise the following steps.

In step 101, environmental information around a video recording device is acquired, the environmental information being for representing an environmental feature around the video recording device.

In step 102, whether the environmental information satisfies a predefined condition is detected.

In step 103, if the environmental information satisfies the predefined condition, the video recording is started.

In summary, in the video recording method provided by embodiments of the present invention, by detecting whether the environmental information around the video recording device satisfies a predefined condition and starting to record a video if the environmental information satisfies the predefined condition, the problem in the related art that the video recording process is fussy is solved, and the effect that the video recording process is simple and convenient is achieved.

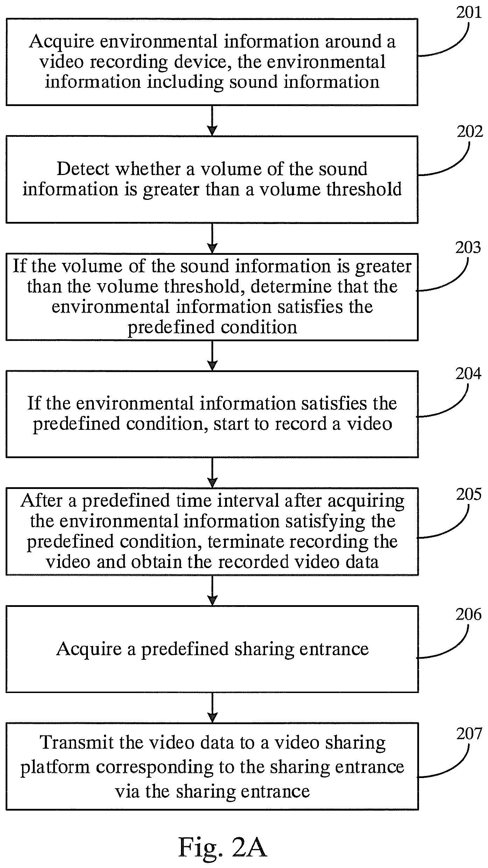

Fig. 2A is a flow chart of a video recording method, according to another exemplary embodiment of the present invention. The video recording method may be used in a video recording device. The video recording method may comprise the following steps.

In step 201, environmental information around a video recording device is acquired, the environmental information including sound information.

When applying the video recording method provided by the embodiments of the present invention, the video recording device may be in a monitoring state in which the video recording device may acquire video data but does not store the video data. Meanwhile, the video recording device may acquire the environmental information around the video recording device, and optionally, the environmental information contains sound information. Illustratively, a microphone may be provided at the video recording device, and the microphone may acquire the sound information around the video recording device in real time.

In step 202, whether a volume of the sound information is greater than a volume threshold is detected.

After acquiring the surrounding sound information, the video recording device may detect whether a volume of the sound information is greater than a predefined volume threshold, wherein the volume is also called loudness, and the video recording device may determine a magnitude of the volume by an amplitude of the sound, and judge whether the volume is greater than a volume threshold.

In step 203, if the volume of the sound information is greater than the volume threshold, it is determined that the environmental information satisfies the predefined condition.

When detecting that the volume of the sound information contained in the environmental information is larger than the volume threshold, the video recording device may determine that the environmental information satisfies the predefined condition.

In addition, step 203 may further comprise the following two substeps.

In substep 2031, when the volume of the sound information is larger than the volume threshold, whether the sound information contains predefined voiceprint data is detected.

When detecting that the volume of the sound information contained in the environmental information is larger than the volume threshold, the video recording device may further detect whether the sound information contains predefined voiceprint data, wherein the voiceprint data is acoustic spectrum data carrying verbal information and being displayed by an electroacoustics instrument, and the data may be used to determine who emits the sound information.

In substep 2032, if the sound information contains the predefined voiceprint data, it is determined that the environmental information satisfies the predefined condition.

When detecting that the sound information contains the predefined voiceprint data, the video recording device may determine that the environmental information satisfies the predefined condition. The predefined voiceprint data may be preset by the user. As an example, the user may set voiceprint data of his family as the predefined voiceprint data in advance. In this way, when the family of the user speaks louder than the volume threshold around the video recording device, the video recording device may acquire the environmental information satisfying the predefined condition.

In step 204, if the environmental information satisfies the predefined condition, a video is started to be recorded.

When determining that the environmental information satisfies the predefined condition, the video recording device may start recording a video. When starting the record of the video, the video recording device may store the acquired video data. As an example, the video recording device may store the video data into a local storage. That is, when the environmental information around the video recording device satisfies the predefined condition, the video recording device may automatically start the video recording, and the predefined condition may be preset by the user. In this way, the video recording device may automatically start the recording of a scene he wants to shoot.

It should be explained that the video recording method provided by the embodiments of the present invention may be used to automatically record a video which the user wishes to record, such as a wonderful scene, for instance a scene in which the crowd cheers, and a scene in which someone sings a song off the cuff. Such scenes occur in bursts, and when the user is in such scenes and wants to record such scenes as a video, the optimal timing of recording may be missed after operating the video recording device. However, when using the video recording method provided by the embodiments of the present invention, the user may pre-set some predefined conditions (such as a sound greater than a volume threshold) possibly appearing during the wonderful scenes, and the video recording device may monitor whether the ambient environmental information satisfies the predefined condition in real time, and start to record a video when the environmental information satisfies the predefined condition.

It should be noted that the sound source of the sound information acquired by the video recording device may not be within a shooting range (the shooting range depends on an orientation of a camera in the video recording device, and an object within the shooting range will appear in the shooting picture of the video recording device) of the video recording device. In this case, the video recording device may not start the recording of a video, or the video recording device may change an orientation of the camera via a steering component, so as to locate the sound source within the shooting range and then start the recording of a video. The video recording device is capable of positioning the sound source by using a microphone array, and controlling the camera to turn to the sound source, wherein the positioning method may be referred to related art, which is not elaborated herein.

It should be noted that, before this step, the video recording device may also be in an off state, only acquire ambient environmental information, and when the environmental information satisfies the predefined condition, the video recording device is turned on and start to record a video.

In step 205, after a predefined time interval after acquiring the environmental information satisfying the predefined condition, recording the video is terminated and the recorded video data is obtained.

After a predefined time interval after acquiring the environmental information satisfying the predefined condition, the video recording device may terminate recording the video and thus obtain the recorded video data. The predefined time interval may be set by the user in advance. Illustratively, the predefined time interval is 30 seconds. In this case, when a sound volume of the user when singing a song is greater than a volume threshold, the video recording device starts to record a video. At this time, the video recording device may continuously acquire the sound information with a volume greater than the volume threshold, and when the user stops singing (or the singing is ended and the applause of audiences ends), the volume of the sound information acquired by the video recording device may be smaller than the volume threshold, i.e., the environmental information fails to satisfy the predefined condition. After that, when 30 seconds are elapsed, the video recording device may terminate recording the video and obtain the recorded video data.

In addition, the video recording device may immediately stop recording the video when the environmental information fails to satisfy the predefined condition, which is not limited by the embodiments of the present invention.

In step 206, a predefined sharing entrance is acquired.

After obtaining the video data, the video recording device may acquire a predefined sharing entrance. The sharing entrance may include any one of a social platform software, an email and an instant messaging software, and the sharing entrance may indicate a sharing path of video data.

In step 207, the video data is transmitted to a video sharing platform corresponding to the sharing entrance via the sharing entrance.

After acquiring the predefined sharing entrance, the video recording device may transmit the video data to a video sharing platform corresponding to the sharing entrance. Illustratively, the video sharing entrance may contain a server address for uploading video data, the video recording device may upload the video data to a server corresponding to the server address, and the server may be a server of the video sharing platform corresponding to the sharing entrance. After that, other users may watch the video data on the video sharing platform.

It should be noted that the video recording device may also transmit the video data to a video sharing platform corresponding to the sharing entrance after a confirmation by the user. Illustratively, the user may establish a wireless or a wired connection with the user's terminal, and after acquiring the video data, the video recording device may firstly transmit the video data to the user's terminal, and the user may watch the video data on the user's terminal and make some editions to the video data Then the user may select whether to transmit the video data to the video sharing platform.

It should be complementally noted that the video recording method provided by the embodiments of the present invention starts the recording of a video when a volume of the sound information is greater than a volume threshold, which achieves the effect that the video recording device is capable of automatically starting to record the scene which the user wants to shoot.

In summary, in the video recording method provided by embodiments of the present invention, by detecting whether the environmental information around the video recording device satisfies a predefined condition, and starting to record a video if the environmental information satisfies the predefined condition, the problem in the related art that the video recording process is fussy is solved, and the effect that the video recording process is simple and convenient is achieved.

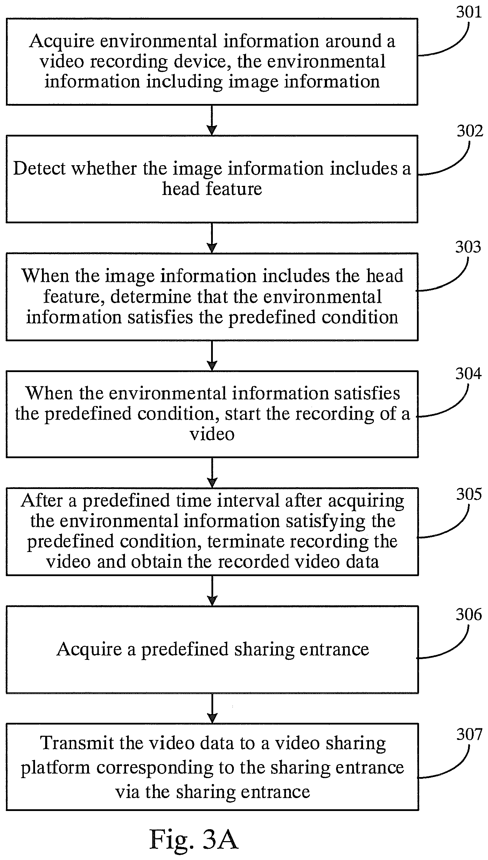

Fig. 3A is a flow chart of a video recording method, according to another exemplary embodiment of the present invention. The video recording method may be applied to record a video. The video recording method may comprise the following steps.

In step 301, environmental information around a video recording device is acquired, the environmental information including image information.

When applying the video recording method provided by the embodiments of the present invention, the video recording device may be in a monitoring state in which the video recording device may acquire video data but does not store the video data. The video recording device may extract image information acting as the environmental information from the acquired video data.

In step 302, whether the image information includes a head feature is detected.

After acquiring the image information, the video recording device may detect whether the image information contains a head feature by using an image detection technology. The head feature includes, but is not limited to, a facial feature, such as a nose, an eye, a mouth, and also may include the feature such as ears on the head.

In step 303, when the image information includes the head feature, it is determined that the environmental information satisfies the predefined condition.

When detecting that the image information includes the head feature, the video recording device may determine that the environmental information satisfies the predefined condition. The image information including a head feature may indicate that the shooting picture of the video recording device contains a person.

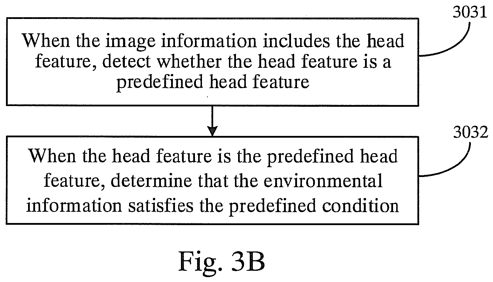

In addition, as shown in Fig. 3B, this step may comprise the following two substeps.

In substep 3031, when the image information includes the head feature, whether the head feature is a predefined head feature is detected.

When detecting that the image information includes the head feature, the video recording device may detect whether the head feature is a predefined head feature. The predefined head feature may be a head feature of a person desired to be shot which is pre-set by the user, i.e., whether the person in the image information being a person who the user desires to shoot may be judged by detecting whether the head feature is a predefined head feature.

In substep 3032, when the head feature is the predefined head feature, it is determined that the environmental information satisfies the predefined condition.

When detecting that the head feature is the predefined head feature, the video recording device may determine that the environmental information satisfies the predefined condition. That is, when a head feature of the person desired to be shot appears in the shooting picture, the video recording device may determine that the environmental information satisfies the predefined condition.

Illustratively, the shooting picture of the video recording device may aim to a position (such as a center of a stage in a concert) at which a target person (a person who the user wants to shoot) may appear, then after the target person appears at the position, the video recording device may detect the acquired image information, then continue to detect whether the head feature is the predefined head feature if a head feature may be detected, and determine that the environmental information satisfies the predefined condition when the head feature is the predefined head feature.

It should be noted that the video recording method provided by the embodiments of the present invention may be used to automatically record the video which the user wants to record, such as a scene in which a person who a certain user wants to shoot appears in the shooting picture of the video recording device. Such scenes occur in bursts (for example, the person who the user wants to shoot only appears for several seconds), and when the user is in such scenes and wants to record such scenes as a video, the optimal timing of recording may be missed after operating the video recording device. However, when using the video recording method provided by the embodiments of the present invention, the user may pre-set some predefined conditions (such as the shooting picture contains a head feature of the target person) possibly appearing during the wonderful scenes, and the video recording device may monitor whether the ambient environmental information satisfies the predefined condition in real time.

In step 304, when the environmental information satisfies the predefined condition, the recording of a video is started.

When determining that the environmental information satisfies the predefined condition, the video recording device may start to record a video. When starting to record a video, the video recording device may store the acquired video data. Illustratively, the video recording device may store the video data into a local storage. That is, when the environmental information around the video recording device satisfies the predefined condition, the video recording device may automatically start the recording of the video, and the predefined condition may be pre-set by the user. In this way, the video recording device may be capable of automatically starting to record a person who the user wants to shoot.

In step 305, after a predefined time interval after acquiring the environmental information satisfying the predefined condition, recording the video is terminated and the recorded video data is obtained.

After a predefined time interval after acquiring the environmental information satisfying the predefined condition, the video recording device may terminate recording the video and obtain the recorded video data, wherein the predefined time interval may be pre-set by the user. Illustratively, the predefined time interval is 30 seconds. When the video recording device detects that a head feature appears in the shooting picture, which indicates that a person appears in the shooting picture, then the video recording device may start to record a video. At this time, the video recording device may continuously obtain the image information of the shooting picture and detect whether the image information contains a head feature. When the person in the shooting picture leaves, the image information acquired by the video recording device cannot detect the head feature, i.e., the environmental information fails to satisfy the predefined condition. Then, after 30 seconds, the video recording device may terminate recording the video and obtain the recorded video data.

In addition, the video recording device may immediately stop recording the video when the environmental information fails to satisfy the predefined condition, which is not limited by the embodiments of the present invention.

In step 306, a predefined sharing entrance is acquired.

After obtaining the video data, the video recording device may acquire a predefined sharing entrance. The sharing entrance may include any one of a social platform software, an email and an instant messaging software, and the sharing entrance may indicate a sharing path of video data.

In step 307, the video data is transmitted to a video sharing platform corresponding to the sharing entrance via the sharing entrance.

After acquiring the predefined sharing entrance, the video recording device may transmit the video data to a video sharing platform corresponding to the sharing entrance.

It should be noted that the video recording device may also transmit the video data to a video sharing platform corresponding to the sharing entrance after a confirmation by the user. Illustratively, the user may establish a wireless or a wired connection with the user's terminal. After acquiring the video data, the video recording device may firstly transmit the video data to the user's terminal, and the user may watch the video data on the user's terminal and make some editions to the video data, then the user may select whether to transmit the video data to the video sharing platform.

It should be complementally noted that the video recording method provided by the embodiments of the present invention starts the recording of a video when the image information includes a head feature, which achieves the effect that the video recording device is capable of automatically starting to record the scene which the user wants to shoot.

In summary, in the video recording method provided by embodiments of the present invention, by detecting whether the environmental information around the video recording device satisfies a predefined condition, and starting to record a video if the environmental information satisfies the predefined condition, the problem in the related art that the video recording process is fussy is solved, and the effect that the video recording process is simple and convenient is achieved.

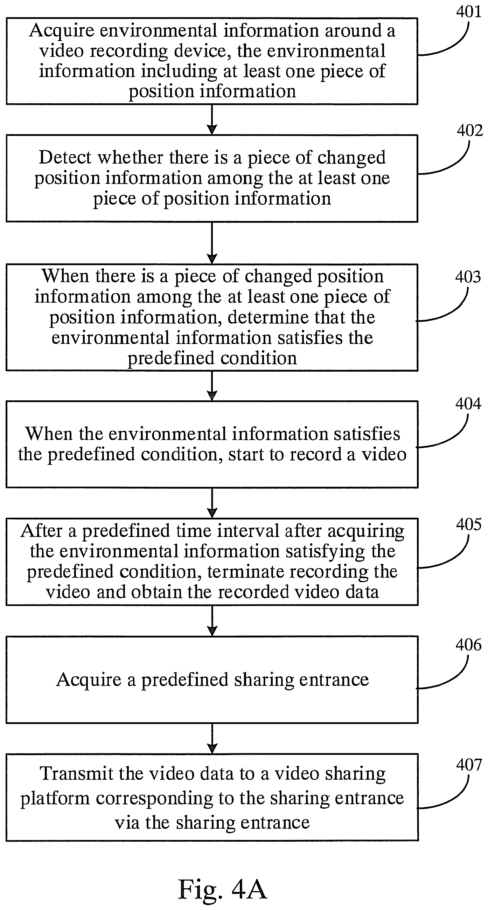

Fig. 4A is a flow chart of a video recording method, according to an exemplary embodiment of the present invention. The video recording method may be applied to record a video. The video recording method may comprise the following steps.

In step 401, environmental information around a video recording device is acquired, the environmental information including at least one piece of position information.

When applying the video recording method provided by the embodiments of the present invention, the video recording device may be in a monitoring state in which the video recording device may acquire video data but does not store the video data. Meanwhile, the video recording method may also acquire the environmental information around the video recording method, wherein the environmental information may include at least one piece of position information, and each position information may include information of a position of any object (may include a person, an animal or other movable objects) around the video recording device relative to the video recording device in a predefined time period. Illustratively, the predefined time period may be 10 seconds, the video recording device may acquire instant position information of a target object (any object around the video recording device) every 5 seconds from 0 second, and total of 3 pieces of instant position information are acquired as the position information of the target object.

It should be noted that the video recording device may acquire the position information of surrounding objects by using an infrared sensor, a laser sensor or a radar, which is not limited by the embodiments of the present invention.

In step 402, whether there is a piece of changed position information among the at least one piece of position information is detected.

After acquiring the at least one piece of position information, the video recording device may detect whether any piece of position information in the at least one piece of position information changes. Illustratively, the position information includes 3 pieces of instant position information of an object within 10 seconds. The video recording device may detect whether the 3 pieces of instant position information are consistent or whether there is a too large difference among the 3 pieces of instant position information. If the 3 pieces of instant position information are not consistent entirely, or then are very different, then it is judged that the position information corresponding to the 3 pieces of instant position information is position information having been changed

In step 403, when there is a piece of changed position information among the at least one piece of position information, it is determined that the environmental information satisfies the predefined condition.

When any of the position information in the at least one piece of the position information changes, the video recording device may determine that the environmental information satisfies the predefined condition. A piece of changed position information indicates that there is a movable object around the video recording device, and at this time, the video recording device may determine that the environmental information satisfies the predefined condition.

Alternatively, the environmental information further includes a light intensity, and when the environmental information further includes a light intensity, this step may comprise the following two substeps.

In substep 4031, when there is a piece of changed position information among the at least one piece of position information, whether the light intensity is within a predefined light intensity range is detected.

When detecting that there is a piece of changed position information among the at least one piece of position information, the video recording device may detect whether the light intensity is within a predefined light intensity range. The light intensity may also be called luminous intensity, and a unit thereof is candela. The user may pre-set a predefined light intensity range, and the predefined light intensity range may be a range within which a video recording may be performed appropriately. The video recording device may acquire a light intensity of the ambient environment by using a light intensity sensor.

In substep 4032, when the light intensity is within the predefined light intensity range, it is determined that the environmental information satisfies the predefined condition.

When detecting that the light intensity is within the predefined light intensity range, the video recording device determines that the environmental information satisfies the predefined condition. Since it is difficult to record a clear video, or even it is very difficult to watch the recorded video in scenes with too strong light intensity or too weak light intensity, when recording a video, recording a video which cannot be watched may be avoided by detecting whether the light intensity around the video recording device is in a predefined light intensity range, which improves the user experience.

In step 404, when the environmental information satisfies the predefined condition, a video is started to be recorded.

When determining that the environmental information satisfies the predefined condition, the video recording device may start to record a video. When starting to record a video, the video recording device may store the acquired video data. Illustratively, the video recording device may store the video data into a local storage. That is, when the environmental information around the video recording device satisfies the predefined condition, the video recording device may automatically start the video recording, and the predefined condition may be preset by the user. In this way, the video recording device may automatically start the recording of a scene which he wants to shoot.

It should be explained that the video recording method provided by the embodiments of the present invention may be used to automatically record a video which the user wishes to record, such as a wonderful scene, for instance a scene in which someone is dancing and a scene of kungfu performance. When using the video recording method provided by the embodiments of the present invention, the user may pre-set some predefined conditions (such as there is a moving object) possibly appeared during the wonderful scenes, and the video recording device may monitor whether the ambient environmental information satisfies the predefined condition in real time, and start to record a video when the environmental information satisfies the predefined condition.

It should be noted that the object corresponding to the changed position information acquired by the video recording device may not be within a shooting range (the shooting range is depended on an orientation of a camera in the video recording device, and an object within the shooting range will appear in the shooting picture of the video recording device) of the video recording device. In this case, the video recording device may not start the recording of a video, or the video recording device may change an orientation of the camera via a steering component, so as to locate the moving object within the shooting range and then start the recording of a video. The video recording device is capable of controlling the camera to turn to the moving object by using the position information.

It should be noted that, before this step, the video recording device may also be in an off state, only acquire ambient environmental information, and when the environmental information satisfies the predefined condition, the video recording device is turned on and start to record a video.

In step 405, after a predefined time interval after acquiring the environmental information satisfying the predefined condition, recording the video is terminated and the recorded video data is obtained.

After a predefined time interval after acquiring the environmental information satisfying the predefined condition, the video recording device may terminate recording the video and thus obtain the recorded video data. The predefined time interval may be set by the user in advance. Illustratively, the predefined time interval is 30 seconds. When the user is dancing, his position relative to the video recording device will change, and the video recording device starts to record a video. At this time, the video recording device may detect the position information in which the user continuously changes, and when the user stops dancing (or the user leaves the shooting range of the video shooting device), the video recording device no longer acquires the changed position information, i.e., the environmental information fails to satisfy the predefined condition. Then after 30 seconds, the video recording device may terminate recording the video and obtain the recorded video data.

In addition, the video recording device may immediately stop recording the video when the environmental information fails to satisfy the predefined condition, which is not limited by the embodiments of the present invention.

In step 406, a predefined sharing entrance is acquired.

After obtaining the video data, the video recording device may acquire a predefined sharing entrance. The sharing entrance may include any one of a social platform software, an email and an instant messaging software, and the sharing entrance may indicate a sharing path of video data.

In step 407, the video data is transmitted to a video sharing platform corresponding to the sharing entrance via the sharing entrance.

After acquiring the predefined sharing entrance, the video recording device may transmit the video data to a video sharing platform corresponding to the sharing entrance.

It should be noted that the video recording device may also transmit the video data to a video sharing platform corresponding to the sharing entrance after a confirmation by the user. Illustratively, the user may establish a wireless or a wired connection with the user's terminal. After acquiring the video data, the video recording device may firstly transmit the video data to the user's terminal, and the user may watch the video data on the user's terminal and make some editions to the video data. Then the user may select whether to transmit the video data to the video sharing platform.

It should be complementally noted that the video recording method provided by the embodiments of the present invention starts the recording of a video when a volume of the sound information is greater than a volume threshold, which achieves the effect that the video recording device is capable of automatically starting to record the scene which the user wants to shoot.

In summary, in the video recording method provided by embodiments of the present invention, by detecting whether the environmental information around the video recording device satisfies a predefined condition, and starting to record a video if the environmental information satisfies the predefined condition, the problem in the related art that the video recording process is fussy is solved, and the effect that the video recording process is simple and convenient is achieved.

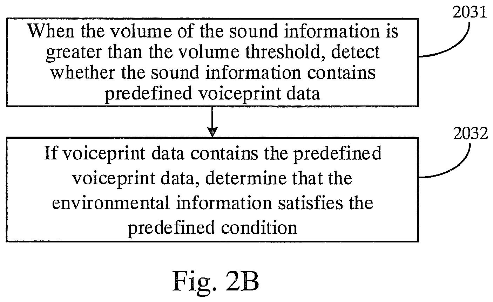

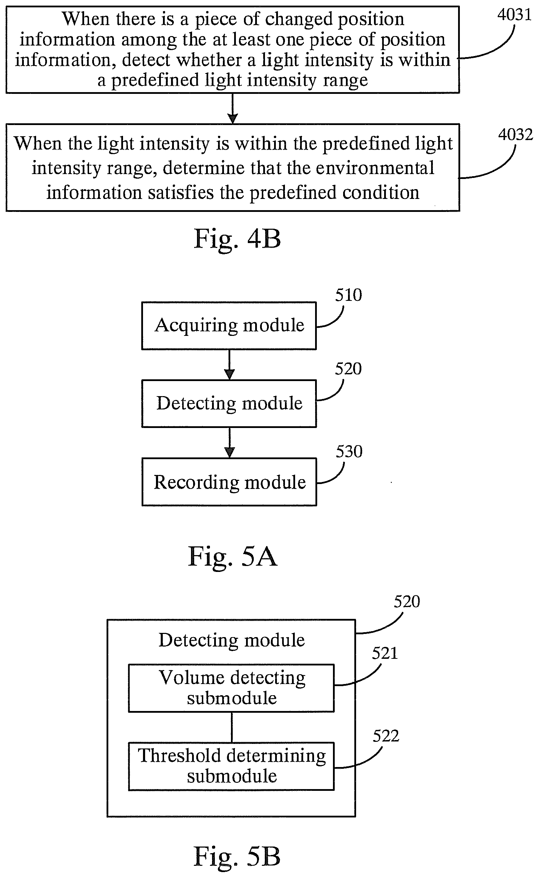

In addition, the embodiment shown in Fig. 2, the embodiment shown in Fig. 3, and the embodiment shown in Fig. 4 may be combined to be implemented, that is, the video recording device may consider environmental information including the sound volume and voiceprint data involved in the embodiment shown in Fig. 2, the image information and the head feature involved in the embodiment shown in Fig. 3, and the position information and the light intensity involved in the embodiment shown in Fig. 4 synthetically, so as to decide whether to record a video. Illustratively, the video recording device may acquire all the above environmental information, and start to record a video when a predetermined number of the environmental information satisfies the predefined condition.

Embodiments of devices of the present invention are described hereinafter, which may be used for performing embodiments of methods of the present invention. For the details not described in the embodiments of devices of the present invention, please refer to the embodiments of methods of the present invention.

Fig. 5A is a block diagram of a video recording device, according to one exemplary embodiment of the present invention. The video recording device may be used to record a video. The video recording device may comprise an acquiring module 510, a detecting module 520 and a recording module 530.

The acquiring module 510 is configured to acquire environmental information around a video recording device, the environmental information being for representing an environmental feature around the video recording device.

The detecting module 520 is configured to detect whether the environmental information satisfies a predefined condition.

The recording module 530 is configured to, if the environmental information satisfies the predefined condition, start to record a video.

In summary, in the video recording device provided by embodiments of the present invention, by detecting whether the environmental information around the video recording device satisfies a predefined condition, and starting to record a video if the environmental information satisfies the predefined condition, the problems in the related art that the video recording device needs to be operated by the user to record a video and the video recording process is fussy are solved, and the effects that the video may be recorded without operation of the user and the video recording process is simple and convenient are achieved.

Alternatively, the environmental information includes sound information.

As shown in Fig. 5B, the detecting module 520 comprises: a volume detecting submodule 521 and a threshold determining submodule 522.

The volume detecting submodule 521 is configured to detect whether a volume of the sound information is greater than a volume threshold.

The threshold determining submodule 522 is configured to, if the volume of the sound information is greater than the volume threshold, determine that the environmental information satisfies the predefined condition.

Alternatively, the threshold determining submodule 522 is configured to, if the volume of the sound information is greater than the volume threshold, detect whether the sound information includes predefined voiceprint data; and if the sound information includes the predefined voiceprint data, determine that the environmental information satisfies the predefined condition.

Alternatively, the environmental information includes image information.

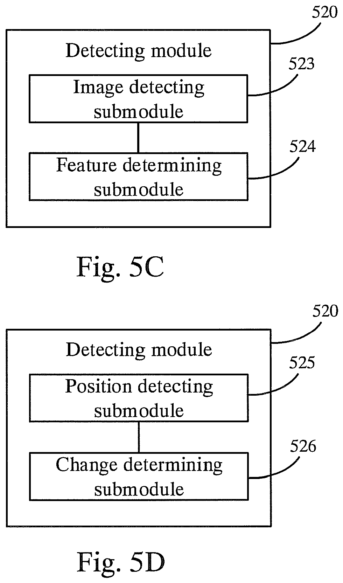

As shown in Fig. 5C, the detecting module 520 comprises: an image detecting submodule 523 and a feature determining submodule 524.

The image detecting submodule 523 is configured to detect whether the image information includes a head feature.

The feature determining submodule 524 is configured to, if the image information includes the head feature, determine that the environmental information satisfies the predefined condition.

Alternatively, the feature determining submodule is configured to, if the image information includes the head feature, detect whether the head feature is a predefined head feature; and if the head feature is the predefined head feature, determine that the environmental information satisfies the predefined condition.

Alternatively, the environmental information includes at least one piece of position information, each piece of the position information including information of a position of any object around the video recording device relative to the video recording device in a predefined time period.

As shown in Fig. 5D, the detecting module includes: a position detecting submodule 525 and a change determining submodule 526.

The position detecting submodule 525 is configured to detect whether there is a piece of changed position information among the at least one piece of position information.

The change determining submodule 526 is configured to, if there is a piece of changed position information among the at least one piece of position information, determine that the environmental information satisfies the predefined condition.

Alternatively, the environmental information further includes a light intensity.

The change determining submodule 526 is configured to, if there is a piece of changed position information among the at least one piece of position information, detect whether the light intensity is within a predefined light intensity range; and if the light intensity is within the predefined light intensity range, determine that the environmental information satisfies the predefined condition.

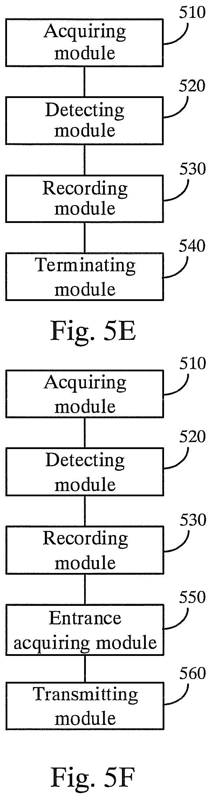

Alternatively, as shown in Fig. 5E, the device further comprises a terminating module 540.

The terminating module 540 is configured to, after a predefined time interval after acquiring the environmental information satisfying the predefined condition, terminate recording the video and obtaining the recorded video data.

Alternatively, as shown in Fig. 5F, the device further comprises an entrance acquiring module 550 and a transmitting module 560.

The entrance acquiring module 550 is configured to acquire a predefined sharing entrance.

The transmitting module 560 is configured to transmit the video data to a video sharing platform corresponding to the sharing entrance via the sharing entrance.

It should be complementally noted that the video recording device provided by the embodiments of the present invention starts the recording of a video when a volume of the sound information is greater than a volume threshold, which achieves the effect that the video recording device is capable of automatically starting to record the scene which the user wants to shoot.

It should be complementally noted that the video recording device provided by the embodiments of the present invention starts the recording of a video when the image information concludes the head feature, which achieves the effect that the video recording device is capable of automatically starting to record the scene which the user wants to shoot.

It should be complementally noted that the video recording device provided by the embodiments of the present invention starts the recording of a video when an object is moving around the video recording device, which achieves the effect that the video recording device is capable of automatically starting to record the scene which the user wants to shoot.

In summary, in the video recording method provided by embodiments of the present invention, by detecting whether the environmental information around the video recording device satisfies a predefined condition, and starting to record a video if the environmental information satisfies the predefined condition, the problem in the related art that the video recording process is fussy is solved, and the effect that the video recording process is simple and convenient is achieved.

With respect to the devices in the above embodiments, the specific manners for performing operations for individual modules therein have been described in detail in the embodiments regarding the methods, which will not be elaborated herein.

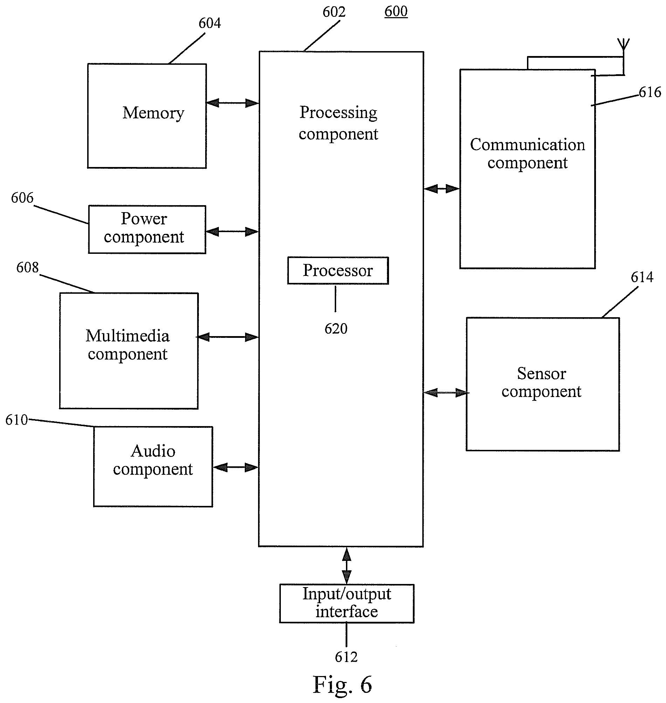

Fig. 6 is a block diagram of a device 600 for recording a video, according to one exemplary embodiment of the present invention. For example, the device 600 may be a mobile phone, a computer, a digital broadcast terminal, a messaging device, a routing device, a gaming console, a tablet, a medical device, exercise equipment, a personal digital assistant, and the like.

Referring to Fig. 6, the device 600 may comprise one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and/or the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 604, executable by the processor 620 in the device 600, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium is executed by the processor of the device 600, enables the device to perform the video recording method provided by the above-mentioned individual embodiments.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A video recording method, comprising:
acquiring (101) environmental information around a video recording device, the environmental information being for representing an environmental feature around the video recording device;
detecting (102) whether the environmental information satisfies four predefined conditions; and
if the environmental information satisfies the four predefined conditions, starting (103, 204, 304, 404) to record a video,
wherein the environmental information includes image information, and
detecting (102) whether the environmental information satisfies a first predefined condition comprises:
detecting (302) whether the image information includes a head feature; and
if the image information includes the head feature, determining (303) that the environmental information satisfies the first predefined condition, determining (303) that the environmental information satisfies the first predefined condition if the image information includes the head feature comprises:
if the image information includes the head feature, detecting (3031) whether the head feature is a predefined head feature; and
if the head feature is the predefined head feature, determining (3032) that the environmental information satisfies the first predefined condition
wherein the environmental information includes at least one piece of position information, each piece of position information including information of a position of any object around the video recording device relative to the video recording device in a predefined time period, and
detecting (102) whether the environmental information satisfies a second predefined condition comprises:
detecting (402) whether there is a piece of changed position information among the at least one piece of position information; and
if there is a piece of changed position information among the at least one piece of position information, determining (403) that the environmental information satisfies the second predefined condition,
wherein the environmental information further includes a light intensity, and
determining (403) that the environmental information satisfies a third predefined condition if there is a piece of changed position information among the at least one piece of position information comprises:
if there is a piece of changed position information among the at least one piece of position information, detecting (4031) whether the light intensity is within a predefined light intensity range; and
if the light intensity is within the predefined light intensity range, determining (4032) that the environmental information satisfies the third condition, and
wherein the environmental information includes sound information,
**characterized by**
detecting (102) whether the environmental information satisfies a fourth predefined condition comprises:
detecting (202) whether a volume of the sound is greater than a volume threshold, and if the volume of the sound information is greater than the volume threshold, determining (203) that the environmental information satisfies the fourth predefined condition; and in that determining (203) that the environmental information satisfies the fourth predefined condition if the volume of the sound information is greater than the volume threshold comprises: if the volume of the sound information is greater than the volume threshold, detecting (2031) whether the sound information includes predefined voiceprint data; and if the sound information includes the predefined voiceprint data, determining (2032) that the environmental information satisfies the fourth predefined condition.

2. The method according to claim 1, further comprising:
after a predefined time interval after acquiring the environmental information satisfying the four predefined conditions, terminating (205, 305, 405) recording the video and obtaining the recorded video data.

3. The method according to claim 2, further comprising:
acquiring (206, 306, 406) a predefined sharing entrance; and
transmitting (207, 307, 407) the video data to a video sharing platform corresponding to the sharing entrance via the sharing entrance.

4. A video recording device, comprising:
an acquiring module (510) configured to acquire environmental information around a video recording device, the environmental information being for representing an environmental feature around the video recording device, said environmental feature including image information, sound information, a piece of position information and a light intensity;
a detecting module (520) configured to detect whether the environmental information satisfies four predefined conditions; and
a recording module (530) configured to, if the environmental information satisfies the four predefined conditions, start to record a video,
wherein the detecting module (520) comprises:
an image detecting submodule (523) configured to detect whether the image information includes a head feature; and
a feature determining submodule (524) configured to, if the image information includes the head feature, determine that the environmental information satisfies a first predefined condition,
and
the feature determining submodule (524) is configured to, if the image information includes the head feature, detect whether the head feature is a predefined head feature; and
if the head feature is the predefined head feature, determine that the environmental information satisfies the first predefined condition,
and in that, the environmental information includes at least one piece of position information, each piece of the position information including information of a position of any object around the video recording device relative to the video recording device in a predefined time period, and
the detecting module (520) comprises:
a position detecting submodule (525) configured to detect whether there is a piece of changed position information among the at least one piece of position information, and
a change determining submodule (526) configured to, if there is a piece of changed position information among the at least one piece of position information, determine that the environmental information satisfies a second predefined condition, and
the environmental information further includes a light intensity, and
the change determining submodule (526) is configured to, if there is a piece of changed position information among the at least one piece of position information, detect whether the light intensity is within a predefined light intensity range; and
if the light intensity is within the predefined light intensity range, determine that the environmental information satisfies a third predefined condition, and
**characterized in that** the detecting module (520) comprises:
a volume detecting submodule (521) configured to detect whether a volume of the sound information is greater than a volume threshold; and a threshold determining submodule (522) configured to, if the volume of the sound information is greater than the volume threshold, determine that the environmental information satisfies a fourth predefined condition; and **in that** the threshold determining submodule (522) is configured to, if the volume of the sound information is greater than the volume threshold, detect whether the sound information includes predefined voiceprint data; and if the sound information includes the predefined voiceprint data, determine that the environmental information satisfies the fourth predefined condition.

5. The device according to claim 4, further comprising:
a terminating module (540) configured to, after a predefined time interval after acquiring the environmental information satisfying the four predefined conditions, terminating recording the video and obtaining the recorded video data.

6. The device according to claim 5, further comprising:
an entrance acquiring module (550) configured to acquire a predefined sharing entrance; and
a transmitting module (560) configured to transmit the video data to a video sharing platform corresponding to the sharing entrance via the sharing entrance.

## Patentansprüche

1. Videoaufzeichnungsverfahren, umfassend:
Erfassen (101) von Umgebungsinformationen um eine Videoaufzeichnungsvorrichtung herum, wobei die Umgebungsinformationen zur Darstellung eines Umgebungsmerkmals um die Videoaufzeichnungsvorrichtung herum dienen,
Detektieren (102), ob die Umgebungsinformationen vier zuvor festgelegte Bedingungen erfüllen, und
wenn die Umgebungsinformationen die vier zuvor festgelegten Bedingungen erfüllen, Starten (103, 204, 304, 404) der Aufzeichnung eines Videos, wobei die Umgebungsinformationen Bildinformationen enthalten, und
wobei das Detektieren (102), ob die Umgebungsinformationen eine erste zuvor festgelegte Bedingung erfüllen, umfasst:
Detektieren (302), ob die Bildinformationen ein Kopfmerkmal enthalten, und wenn die Bildinformationen das Kopfmerkmal enthalten, Bestimmen (303), dass die Umgebungsinformationen die erste zuvor festgelegte Bedingung erfüllen, wobei das Bestimmen (303), dass die Umgebungsinformationen die erste zuvor festgelegte Bedingung erfüllen, wenn die Bildinformationen das Kopfmerkmal enthalten, umfasst: wenn die Bildinformationen das Kopfmerkmal enthalten, Detektieren (3031), ob das Kopfmerkmal ein zuvor festgelegtes Kopfmerkmal ist, und
wenn das Kopfmerkmal das zuvor festgelegte Kopfmerkmal ist, Bestimmen (3032), dass die Umgebungsinformationen die erste zuvor festgelegte Bedingung erfüllen, wobei die Umgebungsinformationen mindestens eine Positionsinformation enthalten, wobei jede Positionsinformation Informationen über eine Position eines Objekts um die Videoaufzeichnungsvorrichtung herum relativ zu der Videoaufzeichnungsvorrichtung in einem zuvor festgelegten Zeitraum enthält, und wobei das Detektieren (102), ob die Umgebungsinformationen eine zweite zuvor festgelegte Bedingung erfüllen, umfasst:
Detektieren (402), ob es eine geänderte Positionsinformation unter der mindestens einen Positionsinformation gibt, und
wenn es eine geänderte Positionsinformation unter der mindestens einen Positionsinformation gibt, Bestimmen (403), dass die Umgebungsinformationen die zweite zuvor festgelegte Bedingung erfüllen, wobei die Umgebungsinformationen des Weiteren eine Lichtintensität umfassen, und
wobei das Bestimmen (403), dass die Umgebungsinformationen eine dritte zuvor festgelegte Bedingung erfüllen, wenn es eine geänderte Positionsinformation unter der mindestens einen Positionsinformation gibt, umfasst:
wenn es eine geänderte Positionsinformation unter der mindestens einen Positionsinformation gibt, Detektieren (4031), ob die Lichtintensität innerhalb eines zuvor festgelegten Lichtintensitätsbereichs liegt, und
wenn die Lichtintensität innerhalb des zuvor festgelegten Lichtintensitätsbereichs liegt, Bestimmen (4032), dass die Umgebungsinformationen die dritte zuvor festgelegte Bedingung erfüllen, und
wobei die Umgebungsinformationen Toninformationen enthalten,
**dadurch gekennzeichnet, dass**
das Detektieren (102), ob die Umgebungsinformationen eine vierte zuvor festgelegte Bedingung erfüllen, umfasst:
Detektieren (202), ob eine Lautstärke des Tons größer als eine Lautstärkeschwelle ist, und wenn die Lautstärke der Toninformationen größer als die Lautstärkeschwelle ist, Bestimmen (203), dass die Umgebungsinformationen die vierte zuvor festgelegte Bedingung erfüllen, und
dadurch, dass das Bestimmen (203), dass die Umgebungsinformationen die vierte zuvor festgelegte Bedingung erfüllen, wenn die Lautstärke der Toninformationen größer als die Lautstärkeschwelle ist, umfasst:
wenn die Lautstärke der Toninformationen größer als die Lautstärkeschwelle ist, Detektieren (2031), ob die Toninformationen zuvor festgelegte Stimmabdruckdaten enthalten, und wenn die Toninformationen die zuvor festgelegten Stimmabdruckdaten enthalten, Bestimmen (2032), dass die Umgebungsinformationen die vierte zuvor festgelegte Bedingung erfüllen.

2. Verfahren nach Anspruch 1, ferner umfassend:
nach einem zuvor festgelegten Zeitintervall nach dem Erfassen der Umgebungsinformationen, die die vier zuvor festgelegten Bedingungen erfüllen, Beenden (205, 305, 405) der Videoaufzeichnung und Erhalten der aufgezeichneten Videodaten.

3. Verfahren nach Anspruch 2, ferner umfassend:
Erfassen (206, 306, 406) eines zuvor festgelegten Gemeinschaftsnutzungszugangs (sharing entrance), und
Senden (207, 307, 407) der Videodaten an eine dem Gemeinschaftsnutzungszugang entsprechende Video-Gemeinschaftsnutzungsplattform (video sharing platform) über den Gemeinschaftsnutzungszugang.

4. Videoaufzeichnungsvorrichtung, umfassend:
ein Erfassungsmodul (510), das dafür konfiguriert ist, Umgebungsinformationen um eine Videoaufzeichnungsvorrichtung herum zu erfassen, wobei die Umgebungsinformationen dazu dienen, ein Umgebungsmerkmal um die Videoaufzeichnungsvorrichtung herum darzustellen, wobei das Umgebungsmerkmal Bildinformationen, Toninformationen, eine Positionsinformation und eine Lichtintensität enthalten,
ein Detektionsmodul (520), das dafür konfiguriert ist zu detektieren, ob die Umgebungsinformationen vier zuvor festgelegte Bedingungen erfüllen, und ein Aufzeichnungsmodul (530), das dafür konfiguriert ist, wenn die Umgebungsinformationen die vier zuvor festgelegten Bedingungen erfüllen, mit der Aufzeichnung eines Videos zu beginnen, wobei das Detektionsmodul (520) umfasst: ein Bilddetektions-Submodul (523), das dafür konfiguriert ist zu detektieren, ob die Bildinformationen ein Kopfmerkmal enthalten, und
ein Merkmalbestimmungs-Submodul (524), das dafür konfiguriert ist, wenn die Bildinformationen das Kopfmerkmal enthalten, zu bestimmen, dass die Umgebungsinformationen eine erste zuvor festgelegte Bedingung erfüllen, und das Merkmalbestimmungs-Submodul (524) dafür konfiguriert ist, wenn die Bildinformationen das Kopfmerkmal enthalten, zu detektieren, ob das Kopfmerkmal ein zuvor festgelegtes Kopfmerkmal ist, und
wenn das Kopfmerkmal das zuvor festgelegte Kopfmerkmal ist, zu bestimmen, dass die Umgebungsinformationen die erste zuvor festgelegte Bedingung erfüllen, und dadurch, dass die Umgebungsinformationen mindestens eine Positionsinformation enthalten, wobei jede Positionsinformation Informationen über eine Position eines Objekts um die Videoaufzeichnungsvorrichtung herum relativ zu der Videoaufzeichnungsvorrichtung in einem zuvor festgelegten Zeitraum enthält, und wobei das Detektionsmodul (520) umfasst:
ein Positionsdetektions-Submodul (525), das dafür konfiguriert ist zu detektieren, ob es eine geänderte Positionsinformation unter der mindestens einen Positionsinformation gibt, und
ein Änderungsbestimmungs-Submodul (526), das dafür konfiguriert ist, wenn es eine geänderte Positionsinformation unter der mindestens einen Positionsinformation gibt, zu bestimmen, dass die Umgebungsinformationen eine zweite zuvor festgelegte Bedingung erfüllen, und
die Umgebungsinformationen des Weiteren eine Lichtintensität enthalten, und das Änderungsbestimmungs-Submodul (526) dafür konfiguriert ist, wenn es eine geänderte Positionsinformation unter der mindestens einen Positionsinformation gibt, zu detektieren, ob die Lichtintensität innerhalb eines zuvor festgelegten Lichtintensitätsbereichs liegt, und
wenn die Lichtintensität innerhalb des zuvor festgelegten Lichtintensitätsbereichs liegt, zu bestimmen, dass die Umgebungsinformationen eine dritte zuvor festgelegte Bedingung erfüllen, und
**dadurch gekennzeichnet, dass** das Detektionsmodul (520) umfasst: ein Lautstärkedetektions-Submodul (521), das dafür konfiguriert ist zu detektieren, ob eine Lautstärke der Toninformationen größer als eine Lautstärkeschwelle ist, und ein Schwellenbestimmungs-Submodul (522), das dafür konfiguriert ist, wenn die Lautstärke der Toninformationen größer als die Lautstärkeschwelle ist, zu bestimmen, dass die Umgebungsinformationen eine vierte zuvor festgelegte Bedingung erfüllen, und
dadurch, dass das Schwellenbestimmungs-Submodul (522) dafür konfiguriert ist, wenn die Lautstärke der Toninformationen größer als die Lautstärkeschwelle ist, zu detektieren, ob die Toninformationen zuvor festgelegte Stimmabdruckdaten enthalten, und
wenn die Toninformationen die zuvor festgelegten Stimmabdruckdaten enthalten, zu bestimmen, dass die Umgebungsinformationen die vierte zuvor festgelegte Bedingung erfüllen.

5. Vorrichtung nach Anspruch 4, ferner umfassend:
ein Beendigungsmodul (540), das dafür konfiguriert ist, nach einem zuvor festgelegten Zeitintervall nach dem Erfassen der Umgebungsinformationen, die die vier zuvor festgelegten Bedingungen erfüllen, die Videoaufzeichnung zu beenden und die aufgezeichneten Videodaten zu erhalten.

6. Vorrichtung nach Anspruch 5, ferner umfassend:
ein Zugangserfassungsmodul (550), das dafür konfiguriert ist, einen zuvor festgelegten Gemeinschaftsnutzungszugang zu erfassen, und
ein Sendemodul (560), das dafür konfiguriert ist, die Videodaten über den Gemeinschaftsnutzungszugang an eine dem Gemeinschaftsnutzungszugang entsprechende Video-Gemeinschaftsnutzungsplattform zu senden.

## Revendications

1. Procédé d'enregistrement vidéo, comprenant :
acquérir (101) des informations du milieu autour d'un dispositif d'enregistrement vidéo, les informations du milieu étant destinées à représenter une caractéristique du milieu autour du dispositif d'enregistrement vidéo ;
détecter (102) si les informations du milieu satisfont à quatre conditions prédéfinies ; et
si les informations du milieu satisfont aux quatre conditions prédéfinies, commencer (103, 204, 304, 404) à enregistrer une vidéo,
dans lequel
les informations du milieu comportent des informations d'image, et
le fait de détecter (102) si les informations du milieu satisfont à un première condition prédéfinie comprend les étapes suivantes :
détecter (302) si les informations d'image comportent une caractéristique de tête ; et
si les informations d'image comportent la caractéristique de tête, déterminer (303) que les informations du milieu satisfont à la première condition prédéfinie, le fait de déterminer (303) que les informations du milieu satisfont à la première condition prédéfinie si les informations d'image comportent la caractéristique de tête comprend les étapes suivantes :
si les informations d'image comportent la caractéristique de tête, détecter (3031) si la caractéristique de tête est une caractéristique de tête prédéfinie ; et
si la caractéristique de tête est la caractéristique de tête prédéfinie, déterminer (3032) que les informations du milieu satisfont à la première condition prédéfinie
dans lequel
les informations du milieu comportent une ou plusieurs informations de position,
chaque information de position comportant des informations d'une position de tout objet autour du dispositif d'enregistrement vidéo par rapport au dispositif d'enregistrement vidéo dans une période de temps prédéfinie, et
le fait de détecter (102) si les informations du milieu satisfont à une deuxième condition prédéfinie comprend les étapes suivantes :
détecter (402) s'il existe une information de position modifiée parmi les une ou plusieurs informations de position ; et
s'il existe une information de position modifiée parmi les une ou plusieurs informations de position, déterminer (403) que les informations du milieu satisfont à la deuxième condition prédéfinie,
dans lequel les informations du milieu comportent en outre une intensité lumineuse, et
le fait de déterminer (403) que les informations du milieu satisfont à une troisième condition prédéfinie s'il existe une information de position modifiée parmi les une ou plusieurs informations de position comprend les étapes suivantes :
s'il existe une information de position modifiée parmi les une ou plusieurs informations de position, détecter (4031) si l'intensité lumineuse se situe dans une plage d'intensité lumineuse prédéfinie ; et
si l'intensité lumineuse se situe dans la plage d'intensité lumineuse prédéfinie, déterminer (4032) que les informations du milieu satisfont à la troisième condition prédéfinie, et
dans lequel les informations du milieu comportent des informations de son, **caractérisé en ce que**
le fait de détecter (102) si les informations du milieu satisfont à une quatrième condition prédéfinie comprend les étapes suivantes :
détecter (202) si un volume du son est supérieur à un seuil de volume, et si le volume des informations de son est supérieur au seuil de volume, déterminer (203) que les informations du milieu satisfont à la quatrième condition prédéfinie ; et **en ce que** le fait de déterminer (203) que les informations du milieu satisfont à la quatrième condition prédéfinie si le volume des informations de son est supérieur au seuil de volume comprend les étapes suivantes : si le volume des informations de son est supérieur au seuil de volume, détecter (2031) si les informations de son comportent des données d'empreinte vocale prédéfinies ; et si les informations de son comportent les données d'empreinte vocale prédéfinies, déterminer (2032) que les informations du milieu satisfont à la quatrième condition prédéfinie.

2. Procédé selon la revendication 1, comprenant en outre :
après un intervalle de temps prédéfini après l'acquisition des informations du milieu satisfaisant aux quatre conditions prédéfinies,
terminer (205, 305, 405) l'enregistrement de la vidéo et obtenir les données vidéo enregistrées.

3. Procédé selon la revendication 2, comprenant en outre :
acquérir (206, 306, 406) une entrée de partage prédéfinie ; et
transmettre (207, 307, 407) les données vidéo à une plateforme de partage vidéo correspondant à l'entrée de partage via l'entrée de partage.

4. Dispositif d'enregistrement vidéo, comprenant :
un module d'acquisition (510) configuré pour acquérir des informations du milieu autour d'un dispositif d'enregistrement vidéo, les informations du milieu étant destinées à représenter une caractéristique du milieu autour du dispositif d'enregistrement vidéo, ladite caractéristique du milieu comportant des informations d'image, des informations de son, une information de position et une intensité lumineuse ;
un module de détection (520) configuré pour détecter si les informations du milieu satisfont à quatre conditions prédéfinies ; et
un module d'enregistrement (530) configuré pour, si les informations du milieu satisfont aux quatre conditions prédéfinies, commencer à enregistrer une vidéo,
dans lequel
le module de détection (520) comprend :
un sous-module de détection d'images (523) configuré pour détecter si les informations d'image comportent une caractéristique de tête ; et
un sous-module de détermination de caractéristiques (524) configuré pour, si les informations d'image comportent la caractéristique de tête, déterminer que les informations du milieu satisfont à une première condition prédéfinie, et
le sous-module de détermination de caractéristiques (524) est configuré pour, si les informations d'image comportent la caractéristique de tête, détecter si la caractéristique de tête est une caractéristique de tête prédéfinie ; et
si la caractéristique de tête est la caractéristique de tête prédéfinie, déterminer que les informations du milieu satisfont à la première condition prédéfinie,
et en ce que les informations du milieu comportent une ou plusieurs informations de position, chacune des informations de position comportant des informations d'une position de tout objet autour du dispositif d'enregistrement vidéo par rapport au dispositif d'enregistrement vidéo dans une période de temps prédéfinie, et
le module de détection (520) comprend :
un sous-module de détection de position (525) configuré pour détecter s'il existe une information de position modifiée parmi les une ou plusieurs informations de position, et
un sous-module de détermination de modification (526) configuré pour, s'il existe une information de position modifiée parmi les une ou plusieurs informations de position, déterminer que les informations du milieu satisfont à une deuxième condition prédéfinie, et
les informations du milieu comportent en outre une intensité lumineuse, et
le sous-module de détermination de modification (526) est configuré pour, s'il existe une information de position modifiée parmi les une ou plusieurs informations de position, détecter si l'intensité lumineuse se situe dans une plage d'intensité lumineuse prédéfinie ; et
si l'intensité lumineuse se situe dans la plage d'intensité lumineuse prédéfinie, déterminer que les informations du milieu satisfont à une troisième condition prédéfinie, et
**caractérisé en ce que** le module de détection (520) comprend :
un sous-module de détection du volume (521) configuré pour détecter si un volume des informations de son est supérieur à un seuil de volume ; et un sous-module de détermination de seuil (522) configuré pour, si le volume des informations de son est supérieur au seuil de volume, déterminer que les informations du milieu satisfont à une quatrième condition prédéfinie ; et **en ce que** le sous-module de détermination de seuil (522) est configuré pour, si le volume des informations de son est supérieur au seuil de volume, détecter si les informations de son comportent des données d'empreinte vocale prédéfinies ; et si les informations de son comportent les données d'empreinte vocale prédéfinies, déterminer que les informations du milieu satisfont à la quatrième condition prédéfinie.

5. Dispositif selon la revendication 4, comprenant en outre :
un module de terminaison (540) configuré pour, après un intervalle de temps prédéfini après l'acquisition des informations du milieu satisfaisant aux quatre conditions prédéfinies, terminer l'enregistrement de la vidéo et obtenir les données vidéo enregistrées.

6. Dispositif selon la revendication 5 comprenant en outre :
un module d'acquisition d'entrée (550) configuré pour acquérir une entrée de partage prédéfinie ; et
un module de transmission (560) configuré pour transmettre les données vidéo à une plateforme de partage vidéo correspondant à l'entrée via l'entrée de partage.
